(19) Europäisches Patentamt
European Patent Office
Office européen des brevets

(11) **EP 4 674 901 A1**

(12) **EUROPEAN PATENT APPLICATION**
published in accordance with Art. 153(4) EPC

(43) Date of publication:
**07.01.2026 Bulletin 2026/02**

(21) Application number: **24763831.5**

(22) Date of filing: **26.02.2024**

(51) International Patent Classification (IPC):
***C08J 9/16*** (2006.01)      ***C08K 3/04*** (2006.01)

(52) Cooperative Patent Classification (CPC):
**C08J 9/16; C08K 3/04**

(86) International application number:
**PCT/JP2024/006764**

(87) International publication number:
**WO 2024/181351 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023  JP 2023028776**

(71) Applicant: **Sekisui Kasei Co., Ltd.
Kita-ku
Osaka-shi
Osaka 530-8565 (JP)**

(72) Inventor: **OWAKI, Hiroki
Osaka-shi, Osaka 530-8565 (JP)**

(74) Representative: **Hoffmann Eitle
Patent- und Rechtsanwälte PartmbB
Arabellastraße 30
81925 München (DE)**

(54) **CARBON-COMPONENT-CONTAINING COMPOSITE RESIN PARTICLES, FOAM PARTICLES, MOLDED FOAM, AND METHOD FOR PRODUCING SAID COMPOSITE RESIN PARTICLES**

(57)   An object of the present invention is to provide a polypropylene foam molded body having higher heat resistance. The present invention relates to carbon-component-containing composite resin particles comprising a polypropylene-based resin, a polyethylene-based resin, a carbon component, and a polystyrene-based resin, wherein the ratio of the total mass content of the polypropylene-based resin, the polyethylene-based resin, and the carbon component to the mass content of the polystyrene-based resin ranges from 5:95 to 50:50, and the composite resin particles have a surface absorbance ratio within a range of 1.0 to 5.0.

## Description

Technical Field

The present invention relates to carbon-component-containing composite resin particles, foam particles, a foam molded body, a method for producing the composite resin particles, and the like.

Background Art

It is known that a foam molded body made of a polystyrene-based resin has excellent rigidity, thermal insulation, lightweight properties, water resistance, and foam moldability, but has low chemical resistance and impact resistance. These properties are compensated for by utilizing a composite resin foam molded body obtained from composite resin particles of a polystyrene-based resin and a polyolefin-based resin. The composite resin particles are generally produced by using a base resin of a polyolefin-based resin, such as a polyethylene-based resin, as seed particles (also referred to as "core particles"), and adding a styrene-based monomer to the seed particles, followed by polymerization of the monomer. This polymerization is also referred to as "seed polymerization." The composite resin particles are generally foamed (also referred to as "pre-foamed") to form foam particles after a foaming gas is blended, and the foam particles are placed in a mold and heated to produce a foam molded body.

By changing the type of polyolefin-based resin constituting the composite resin particles, the characteristics of the composite resin foam molded body can be changed. For example, heat resistance is improved when a polypropylene-based resin is used. By blending carbon in addition to a polypropylene-based resin and a polystyrene-based resin, a black composite resin foam molded body having high heat resistance is obtained. There has been a demand for composite resin foam molded bodies having high heat resistance mainly for automobile components, and composite resin foam molded bodies having excellent heat resistance obtained from composite resin particles composed of a polypropylene-based resin and a polystyrene-based resin have been used (PTL 1). However, if the pressure of the vapor used for foam molding is not high, foaming becomes insufficient, and it is difficult to obtain a molded body having desired characteristics, such as shape and density. When the pressure of the vapor required for foam molding is high, a large amount of energy is required for molding, and further, it is necessary to use a molding machine corresponding to the pressure, which consequently increases the cost required for molding.

In view of the above, for the purpose of reducing the pressure of the vapor used for foam molding of composite resin foam particles that use polypropylene, PP-EVA-PS composite resin particles have been developed. The PP-EVA-PS composite resin particles are obtained by blending polypropylene with an ethylene-vinyl acetate copolymer to obtain a polypropylene (PP)-ethylene vinyl acetate copolymer (EVA) as a base resin and seed particles, and impregnating and polymerizing the seed particles with a styrene monomer (PTL 2).

Citation List

Patent Literature

PTL 1: JP4718645B
PTL 2: WO2022/202680

Summary of Invention

Technical Problem

When foam particles are produced from the composite resin particles disclosed in PTL 2 and then used for in-mold foam molding, the vapor pressure during foam molding can be made lower than conventionally. However, the present inventor realized that there is a demand for polypropylene foam molded bodies having higher heat resistance in applications of foam molded bodies, such as in automobile components.

Solution to Problem

The present inventor has found, for example, that when carbon-component-containing composite resin particles obtained from seed particles containing a polypropylene-based resin, a polyethylene-based resin, and a carbon component have a surface absorbance ratio (D698/D1380) within a specific range, the vapor pressure during foam molding can be reduced, and additionally, an in-mold foam molded body having high heat resistance is obtained. The present invention has thus been completed.

The present invention typically includes the following aspects.

Item 1.

Carbon-component-containing composite resin particles comprising a polypropylene-based resin, a polyethylene-based resin, a carbon component, and a polystyrene-based resin,

wherein the ratio of the total mass content of the polypropylene-based resin, the polyethylene-based resin, and the carbon component to the mass content of the polystyrene-based resin ranges from 5:95 to 50:50, and
the composite resin particles have a surface absorbance ratio that is determined by the following method and that falls within a range of 1.0 to 5.0:
Surface absorbance ratio ($R_S$): absorbance values at 1380 cm$^{-1}$ (D1380) and 698 cm$^{-1}$ (D698) are calculated from an infrared absorption spectrum obtained by analyzing a surface of the composite resin particles by ATR infrared spectroscopy and used in the formula D698/D1380 to obtain a value as the surface absorbance ratio.

Item 2.

The carbon-component-containing composite resin particles according to Item 1, wherein the content of the polypropylene-based resin is 2 to 50 mass%, the content of the polyethylene-based resin is 2 to 50 mass%, the content of the carbon component is 0.5 to 5 mass%, and the content of the polystyrene-based resin is 40 to 95 mass%, based on the total mass of the composite resin particles.

Item 3.

The carbon-component-containing composite resin particles according to Item 1 or 2, wherein the ratio of the mass content of the polypropylene-based resin to the mass content of the polyethylene-based resin ranges from 50:50 to 90:10.

Item 4.

The carbon-component-containing composite resin particles according to any one of Items 1 to 3, which have a central area absorbance ratio that is determined by the following method and that falls within a range of 2.0 to 30.0: Central area absorbance ratio ($R_C$): absorbance values at 1380 cm$^{-1}$ (D1380) and 698 cm$^{-1}$ (D698) are calculated from an infrared absorption spectrum obtained by analyzing a central area of the composite resin particles by ATR infrared spectroscopy and used in the formula D698/D1380 to obtain a value as the central area absorbance ratio.

Item 5.

The carbon-component-containing composite resin particles according to Item 4, wherein the ratio of the surface absorbance ratio ($R_S$) to the central area absorbance ratio ($R_C$) ($R_S/R_C$) is 0.10 to 0.90.

Item 6.

The carbon-component-containing composite resin particles according to any one of Items 1 to 5, wherein the polyethylene-based resin comprises at least one member selected from the group consisting of an ethylene-based copolymer and polyethylene.

Item 7.

The carbon-component-containing composite resin particles according to Item 6, wherein the ethylene-based copolymer comprises an ethylene-vinyl acetate copolymer.

Item 8.

The carbon-component-containing composite resin particles according to Item 7, wherein the ethylene-vinyl acetate copolymer has a melting point of 100 to 120°C and has a ratio of mass average molecular weight (Mw) to number average molecular weight (Mn) (Mw/Mn) of 1.0 to 7.0.

Item 9.

The carbon-component-containing composite resin particles according to any one of Items 1 to 8, wherein the polypropylene-based resin is random polypropylene.

Item 10.

The carbon-component-containing composite resin particles according to any one of Items 1 to 9, wherein the carbon component is contained as a carbon masterbatch containing the carbon component and a polyethylene-based resin.

Item 11.

The carbon-component-containing composite resin particles according to Item 10, wherein the polyethylene-based resin contained in the carbon masterbatch is at least one member selected from the group consisting of high-density polyethylene and linear low-density polyethylene.

Item 12.

Foam particles comprising the carbon-component-containing composite resin particles according to any one of Items 1 to 11.

Item 13.

The foam particles according to Item 12, which have a bulk density of 10 kg/m$^3$ to 200 kg/m$^3$.

Item 14.

A foam molded body comprising the foam particles according to Item 12 or 13.

Item 15.

The foam molded body according to Item 14, which has a density of 20 kg/m$^3$ to 50 kg/m$^3$.

Item 16.

An automobile component comprising the foam molded body according to Item 14 or 15.

Item 17.

A method for producing carbon-component-containing composite resin particles for producing an in-mold foam molded body, the composite resin particles comprising a polypropylene-based resin, a polyethylene-based resin, a carbon component, and a polystyrene-based resin, the method comprising:
step (A) of impregnating seed particles containing a polypropylene-based resin, a polyethylene-based resin, and a carbon component with a styrene-based monomer and polymerizing the styrene-based monomer to obtain carbon-component-containing composite resin particles,
wherein in step (A), the styrene-based monomer is added at a rate of 0.03 parts by weight/second or less per 100 parts by weight of the seed particles in the presence of a water-soluble polymerization inhibitor.

Item 18.

The method for producing carbon-component-containing composite resin particles according to Item 17, wherein the carbon component is contained in the seed particles as a carbon masterbatch containing the carbon component.

Item 19.

The method for producing carbon-component-containing composite resin particles according to Item 17 or 18, wherein the amount of the water-soluble polymerization inhibitor used is 10 ppm to 2000 ppm based on the mass of the seed particles.

Item 20.

The method for producing carbon-component-containing composite resin particles according to any one of Items 17 to 19, wherein the water-soluble polymerization inhibitor is at least one member selected from the group consisting of sodium nitrite, potassium nitrite, ammonium nitrite, calcium nitrite, silver nitrite, strontium nitrite, cesium nitrite, barium nitrite, magnesium nitrite, lithium nitrite, and dicyclohexylammonium nitrite.

Advantageous Effects of Invention

The carbon-component-containing composite resin particles and foam particles of the present invention enable foam molding at a high heat-fusion rate even with a medium having low vapor pressure (e.g., water vapor), and so the energy required for foam molding can be reduced. That is, excellent moldability at low vapor pressure is achieved (a high fusion rate of the foam particles is achieved during foam molding at low vapor pressure). Accordingly, the equipment required for foam molding can be simplified, and the cost required for foam molding can be reduced.
Additionally, the carbon-component-containing composite resin particles and foam particles of the present invention can provide a foam molded body having excellent heat resistance (in other words, a low heating dimensional change rate).
Furthermore, the composite resin particles and foam particles of the present invention can provide a foam molded body having excellent flame retardancy.

Brief Description of Drawings

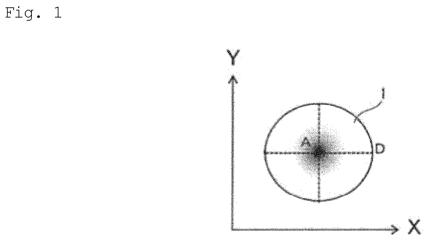

Fig. 1 is a diagram used to explain a specific central area absorbance ratio. Reference Numeral 1 represents a particle shown in the image of a slice sample obtained for determining the central area absorbance ratio.

Description of Embodiments

In the present specification, the terms "comprising" and "containing" are intended to include the terms "consisting essentially of" and "consisting of."
In the present specification, the term "foaming" is intended to mean "in-mold foaming" using foam particles unless otherwise specified.
In the present specification, the term "MB" is intended to mean "masterbatch" unless otherwise specified.
In the present specification, the word "to" in a numerical range means equal to or more than the left-end value and equal to or less than the right-end value. For example, "0.5 to 10 wt%" and "0.5 wt% to 10 wt%" both mean "0.5 wt% or more and 10 wt% or less." In terms of numerical ranges, "or more" means "equal to or more than," and "or less" means "equal to or less than."
In the numerical ranges stated in the present specification, the upper or lower limit value of a numerical range can be freely combined with the upper or lower limit value of any other numerical ranges in the same paragraph or in other paragraphs. The upper or lower limit value of a specific numerical range stated in the present specification may be replaced with a value shown in the Examples or a value that can be unambiguously derived from the Examples.
The composite resin particles are typically obtained by impregnating base resin particles (seed particles) with a styrene-based monomer and polymerizing the styrene-based monomer. The base resin contains at least a polypropylene-based resin, a polyethylene-based resin, and a carbon component. The total content of the polypropylene-based resin, polyethylene-based resin, and carbon component in the seed particles may be, for example, 80 to 100 mass%, 85 to 100 mass%, 90 to 100 mass%, 95 to 100 mass%, or 100 mass%, based on the total mass of the seed particles.

Polypropylene-based Resin; PP

The polypropylene-based resin is not particularly limited, and known resins can be used. Examples of the polypropylene-based resin include homopolymers, random copolymers, block copolymers, and the like. Random copolymers (also referred to as "random polypropylene") are preferred in terms of high moldability (i.e., foam molding can be performed due to high fusibility of foam particles at low vapor pressure, and the foaming ratio during foaming tends to be high).

The polypropylene-based resin for use may be a recycled product, such as a recycled resin obtained by recovering and recycling a polypropylene-based resin used as a packaging material or the like.

The copolymer may contain an olefin (e.g., ethylene or butene) other than propylene. Examples of random copolymers include an ethylene-propylene random copolymer, a propylene-butene random copolymer, an ethylene-propylene-butene random copolymer, and the like. Examples of block copolymers include an ethylene-propylene block copolymer, a propylene-butene block copolymer, an ethylene-propylene-butene block copolymer, and the like.

The proportion of the component derived from an olefin other than propylene in the copolymer can be, for example, 0.01 to 10 mass%, 0.01 to 8 mass%, 0.1 to 8 mass%, or 0.2 to 8 mass%, preferably 1 to 8 mass%, and more preferably 2 to 7 mass%.

A commercially available resin can be used as the polypropylene-based resin. For example, such resins are available from Prime Polymer Co., Ltd., SunAllomer Ltd., Sumitomo Chemical Co., Ltd., and other companies.

The melting point of the polypropylene-based resin is not particularly limited, but can be, for example, 130 to 165°C, preferably 130 to 150°C, and more preferably 130 to 145°C. A melting point within this range is advantageous in terms of excellent moldability at low vapor pressure or the tendency to increase the foaming ratio during foaming. The melting point can be specified by the method described in the Examples.

The melt mass-flow rate (also referred to as "MFR" in the present specification) of the polypropylene-based resin is not particularly limited, but is preferably 0.1 g/10 min to 20.0 g/10 min, more preferably 1 g/10 min to 10 g/10 min, and particularly preferably 4 g/10 min to 8 g/10 min. MFR within this range is advantageous in terms of excellent moldability at low vapor pressure. MFR can be specified by the method described in the Examples.

The polypropylene-based resin may have a density of 880 $kg/m^3$ to 950 $kg/m^3$. A density within this range is advantageous for improving the strength of the foam molded body and in terms of molding processability. The density is preferably 890 $kg/m^3$ to 930 $kg/m^3$, more preferably 890 $kg/m^3$ to 920 $kg/m^3$, and particularly preferably 890 $kg/m^3$ to 910 $kg/m^3$. A density within this range is advantageous in terms of excellent moldability at low vapor pressure and for improving the strength of the foam molded body. The density can be specified in the following manner.

Density of Polypropylene-based Resin

The density of the polypropylene-based resin is measured by the density gradient tube method according to JIS K6922-1: 1998.

The content of the polypropylene-based resin in the base resin or seed particles can be, for example, 10 to 90 mass%, 10 to 88 mass%, 10 to 85 mass%, 10 to 80 mass%, 10 to 75 mass%, 30 to 90 mass%, 30 to 80 mass%, 30 to 75 mass%, 40 to 90 mass%, 40 to 80 mass%, 40 to 75 mass%, 50 to 90 mass%, 50 to 80 mass%, or 50 to 75 mass%, more preferably 50 to 80 mass%, and particularly preferably 60 to 80 mass%, based on the total mass of the base resin or seed particles.

The content of the polypropylene-based resin in the composite resin particles can be, for example, 2 to 50 mass% or 2 to 35 mass%, preferably 4 to 30 mass%, more preferably 5 to 25 mass%, and particularly preferably 10 to 25 mass%, based on the total mass of the composite resin particles.

Setting the content of the polypropylene-based resin in the base resin, seed particles, or composite resin particles to be within this range is advantageous in terms of the heat resistance of the foam molded body, for improving the strength of the foam molded body, and in terms of sufficient flame retardancy of the foam molded body.

Polyethylene-based Resin

The polyethylene-based resin is kneaded or melt-kneaded with a polypropylene-based resin and a carbon component to form a base resin. The base resin is cut into particles of a desired size to form seed particles.

The polyethylene-based resin may be an ethylene-based copolymer, polyethylene, or the like, and is preferably an ethylene-based copolymer or polyethylene, and more preferably an ethylene-based copolymer. Although the polyethylene-based resin may be used singly or in a combination of two or more, it is preferable that the polyethylene-based resin comprises at least an ethylene-based copolymer. When the polyethylene-based resin comprises an ethylene-based copolymer, its content can be 50 mass% or more, 60 mass% or more, or 70 mass% or more, and may be 100 mass% or less or 90 mass% or less, based on the mass of the entire polyethylene-based resin. These upper and lower limit values can be appropriately combined. The content of the ethylene-based copolymer may be 50 to 100 mass%, 60 to 100 mass%, 70 to 100 mass%, 50 to 90 mass%, 60 to 90 mass%, or 70 to 90 mass%, based on the mass of the entire polyethylene-based resin.

The polyethylene may be a high-density polyethylene, a linear low-density polyethylene, or the like, and is preferably a high-density polyethylene or a linear low-density polyethylene. The polyethylene may be used singly or in a combination of two or more.

The ethylene-based copolymer is, for example, a copolymer of ethylene and an ester-based monomer. It is preferable that the ethylene-based copolymer has a carbonyl group in the molecule and has a -COO- bond or a -OCO-bond.

The ethylene-based copolymer is preferably a copolymer of ethylene and at least one ester-based monomer, such as alkyl acrylate ester, alkyl methacrylate ester, or saturated aliphatic monocarboxylic acid vinyl ester. The ester-based monomer is preferably at least one member selected from the group consisting of alkyl acrylate ester, alkyl methacrylate ester, and saturated aliphatic monocarboxylic acid vinyl ester, more preferably at least one member selected from the group consisting of alkyl acrylate ester and saturated aliphatic monocarboxylic acid vinyl ester, and even more preferably saturated aliphatic monocarboxylic acid vinyl ester. The ethylene-based copolymer is particularly preferably an ethylene-vinyl acetate copolymer in terms of excellent moldability at low vapor pressure and excellent heat resistance.

The alkyl acrylate ester is, for example, a C1-C4 alkyl ester of acrylic acid, and is preferably at least one member selected from the group consisting of methyl acrylate and ethyl acrylate.

The alkyl methacrylate ester is, for example, a C1-C4 alkyl ester of methacrylic acid, and is preferably at least one member selected from the group consisting of methyl methacrylate and ethyl methacrylate.

The saturated aliphatic monocarboxylic acid vinyl ester is preferably at least one member selected from the group consisting of vinyl acetate and vinyl propionate, and more preferably vinyl acetate.

The proportion of the ester-based monomer-derived component in the ethylene-based copolymer is preferably 1 to 20 mass%, more preferably 1 to 14 mass%, and even more preferably 1 to 10 mass%.

The melting point of the ethylene-based copolymer is preferably 100°C to 120°C, more preferably 102°C to 115°C, and even more preferably 103°C to 110°C. A melting point within this range is advantageous in terms of excellent moldability at low vapor pressure and excellent heat resistance. The melting point can be specified by the method described in the Examples.

The ratio of the mass average molecular weight (Mw) of the ethylene-based copolymer to the number average molecular weight (Mn) of the ethylene-based copolymer (Mw/Mn) is, for example, 1.0 to 7.0, and preferably 1.0 to 5.5. Mw/Mn within this range is advantageous for homogenizing the cell diameter. A uniform cell diameter is advantageous for reducing the amount of a foam regulator used, and in terms of excellent moldability at low vapor pressure and excellent heat resistance. Mw/Mn is more preferably 3.0 to 5.5, and particularly preferably 3.5 to 5.5. The number average molecular weight and mass average molecular weight can be specified by the method described in the Examples.

MFR of the ethylene-based copolymer is not particularly limited, but is preferably 0.4 g/10 min to 5.0 g/10 min. MFR within this range is advantageous in terms of excellent moldability at low vapor pressure and excellent heat resistance. MFR is more preferably 0.4 g/10 min to 4.0 g/10 min, and even more preferably 0.5 g/10 min to 3.0 g/10 min. MFR can be specified by the method described in the Examples.

The content of the polyethylene-based resin in the base resin or seed particles can be, for example, 10 to 90 mass%, 12 to 90 mass%, 15 to 95 mass%, 20 to 90 mass%, 10 to 70 mass%, 15 to 70 mass%, 20 to 70 mass%, 10 to 60 mass%, 15 to 60 mass%, 20 to 60 mass%, 10 to 50 mass%, 15 to 50 mass%, or 20 to 50 mass%, based on the total mass of the base resin or seed particles. The content is preferably 15 to 50 mass%, and particularly preferably 15 to 45 mass%. Setting the content of the polyethylene-based resin to be within this range is advantageous in terms of excellent moldability at low vapor pressure and excellent heat resistance.

The content of the polyethylene-based resin in the composite resin particles can be, for example, 2 to 50 mass%, 2 to 35 mass%, or 2 to 30 mass%, based on the total mass of the composite resin particles. The content is preferably 2 to 25 mass%, more preferably 2 to 20 mass%, and particularly preferably 5 to 20 mass%. Setting the content of the polyethylene-based resin to be within this range is advantageous in terms of excellent moldability at low vapor pressure and excellent heat resistance.

In the base resin, seed particles, and composite resin particles, it is preferable that the ratio of the mass content of the polypropylene-based resin to the mass content of the polyethylene-based resin ranges from, for example, 50:50 to 90:10 or 55:45 to 90:10, preferably 55:45 to 80:20, and more preferably 60:40 to 80:20, in terms of excellent moldability at low vapor pressure and excellent heat resistance.

Carbon Component

The base resin or seed particles contain a carbon component in addition to the polypropylene-based resin and the polyethylene-based resin. This allows the foam molded body to have black color and improves heat resistance. Examples of the carbon component include carbon black (CB), such as furnace black, ketjen black, channel black, thermal black, and acetylene black, and graphite and carbon fiber.

The carbon component to be added to the base resin or seed particles is preferably in the form of particles, and the average particle size thereof may be 5 nm to 100 nm, and preferably 15 nm to 35 nm. The average particle size of the carbon component is an average value of the diameters of particles observed with an electron microscope. However, when the carbon component is carbon black, the average particle size of the carbon black is an average value of the diameters of particles calculated by measuring small spherical components (which have a contour of fine crystals and cannot be separated) constituting aggregates of the carbon black with an electron microscope photograph.

The content of the carbon component in the base resin, seed particles, or composite resin particles is, for example, 0.1 to 8 mass%, preferably 0.2 to 7 mass%, and more preferably 0.3 to 7 mass%, based on the total mass of the polypropylene-based resin and polyethylene-based resin.

Setting the amount of the carbon component blended in the composite resin particles to be within the above range is advantageous for producing a foam molded body that has sufficient black color and excellent heat resistance. The carbon component may be, for example, added to and mixed with the base resin, or may be added to and mixed with the base resin as a carbon MB.

The carbon MB can serve as a source of the carbon component. When the carbon MB is used, the content of the carbon MB in the base resin, seed particles, or composite resin particles may be an amount corresponding to the amount of the carbon component contained in the base resin, seed particles, or composite resin particles (for example, an amount in the ranges stated above). For example, when the carbon component contained in the seed particles is 5 g, 50 g of a carbon MB containing 10 mass% of the carbon component is added to the base resin.

The content of the carbon MB in the base resin, seed particles, or composite resin particles can be, for example, 1 to 25 mass%, 3 to 20 mass%, or 5 to 15 mass%, based on the total mass of the polypropylene-based resin and the polyethylene-based resin.

The carbon MB can be one obtained by dispersing the carbon component in a thermoplastic resin. This resin can constitute the base resin. The resin may be a polyethylene-based resin or a polypropylene-based resin. The resin may be used singly or in a combination of two or more. When the resin contained in the carbon MB is not a polyethylene-based resin or a polypropylene-based resin, the resin belongs to the other resins stated below.

The description of the polyethylene-based resin above can be applied to the polyethylene-based resin contained in the carbon MB. The polyethylene-based resin may be, for example, a high-density polyethylene or a linear low-density polyethylene. The polyethylene-based resin may be used singly or in a combination of two or more.

The description of the polypropylene-based resin above can be applied to the polypropylene-based resin contained in the carbon MB. The polypropylene-based resin may be used singly or in a combination of two or more.

The content of the carbon component in the carbon MB can be, for example, 10 to 70 mass%, and is preferably 30 to 50 mass%, based on the mass of the carbon masterbatch.

The content of the thermoplastic resin in the carbon MB can be, for example, 30 to 90 mass%, and is preferably 50 to 70 mass%, based on the mass of the carbon masterbatch.

The carbon MB for use may be a commercially available product. For example, the carbon MB can be obtained from Dainichiseika Color & Chemicals Mfg. Co., Ltd., ENEOS NUC Corporation, DIC Corporation, and the like.

Other Resins

The base resin or seed particles may or may not contain other resins in addition to the polypropylene-based resin and the polyethylene-based resin as long as the amount is within a range that does not impair moldability at low vapor pressure and the heat resistance of the foam molded body. Examples of other resins include ethyl acrylate copolymers, polyester-based resins, and the like.

The content of other resins in the base resin or seed particles is, for example, 0.1 to 30 mass%, preferably 0.2 to 20 mass%, and more preferably 0.3 to 10 mass%, based on the total mass of the polypropylene-based resin and the polyethylene-based resin.

Inorganic Component

The base resin or seed particles may contain an inorganic component (excluding the carbon component) in addition to the polypropylene-based resin, the polyethylene-based resin, and the carbon component. When the seed particles contain an inorganic component, fine cells are easily obtained. Examples of inorganic components include inorganic foam regulators, such as talc, silica, calcium silicate, calcium carbonate, sodium borate, and zinc borate. Talc and silica are preferred in terms of easily homogenizing the cell size.

The content of the inorganic component in the base resin, seed particles, or composite resin particles can be, for example, 0.01 to 5 mass%, preferably 0.1 to 1 mass%, based on the total mass of the polypropylene-based resin and the polyethylene-based resin.

The inorganic component may be added during mixing of the polypropylene-based resin, the polyethylene-based resin, and the carbon component, or may be added to a mixed resin obtained by mixing the polypropylene-based resin, the polyethylene-based resin, and the carbon component.

Other Components

The base resin or seed particles may contain other components in addition to the polypropylene-based resin, the polyethylene-based resin, and the materials mentioned above. Examples of other components include colorants, nucleating agents, stabilizers, fillers (reinforcing materials), higher fatty acid metal salts, antistatic agents, lubricants, natural or synthetic oils, waxes, UV absorbers, weather stabilizers, antifogging agents, anti-blocking agents, slip agents, coating agents, neutron-blocking agents, and the like. When the base resin or seed particles contain other components, the content thereof may be 0.001 to 10 mass%, preferably 0.001 to 5 mass% or less, and more preferably 0.001 to 3 mass%, based on the total mass of the base resin or seed particles.

Method for Producing Seed Particles

The seed particles can be obtained by a known method used for the production of seed particles for forming foam molded bodies. For example, a base resin containing a polypropylene-based resin, a polyethylene-based resin, and a carbon component is melt-kneaded and extruded in an extruder to obtain a strand, and the obtained strand is cut in air, in water, or while heating, for granulation. The resin may be mixed with a mixer before being placed in the extruder.

The seed particles may have any known shape. The shape is preferably cylindrical, oval-spherical (egg-shaped), or spherical. Further, the shape is more preferably oval-spherical or spherical in terms of good filling ability of the foam particles obtained from the seed particles into the mold.

The seed particles preferably have an average particle size of 0.5 to 1.4 mm.

Composite Resin Particles

The composite resin particles contain, as resin components, at least a polypropylene-based resin and a polyethylene-based resin derived from a base resin, and a polystyrene-based resin derived from a styrene-based monomer. The total content of the polypropylene-based resin, polyethylene-based resin, carbon component, and polystyrene-based resin in the composite resin particles can be, for example, 80 to 100 mass%, 85 to 100 mass%, 90 to 100 mass%, or 95 to 100 mass%, based on the total mass of the composite resin particles.

Examples of the polystyrene-based resin include polymers derived from styrene-based monomers, such as styrene, α-methylstyrene, p-methylstyrene, and t-butylstyrene. Further, the styrene-based polymer may be a polymer formed from a styrene-based monomer and another monomer copolymerizable with the styrene-based monomer. Examples of other monomers include polyfunctional monomers, such as divinylbenzene, and (meth)acrylic acid esters that do not contain a benzene ring in the structure, such as butyl (meth)acrylate. Resin components derived from such other monomers may be contained in the styrene-based polymer in an amount not exceeding 5 mass%.

A polystyrene-based resin in which a (meth)acrylic acid ester is copolymerized with a styrene-based monomer is composed of a component derived from the (meth)acrylic acid ester and a component derived from the styrene-based monomer. The component derived from the (meth)acrylic acid ester is also referred to as the "(meth)acrylic acid ester-derived resin component."

The (meth)acrylic acid ester may be an acrylic acid ester or a methacrylic acid ester, but is preferably an acrylic acid ester. Examples of the (meth)acrylic acid ester include methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, and the like; preferably methyl acrylate, ethyl acrylate, propyl acrylate, butyl acrylate, pentyl acrylate, hexyl acrylate, and 2-ethylhexyl acrylate; and more preferably butyl acrylate.

The content of the (meth)acrylic acid ester-derived resin component may be 0 to 5.00 mass%, and preferably 0 to 3.00 mass%, based on the mass of the styrene-based monomer-derived resin component. For example, in Comparative Example 2, 300 g of a styrene monomer, 20 g of butyl acrylate, and 1080 g of a styrene monomer are used as polystyrene-based resins; thus, the content of the resin component derived from butyl acrylate is 1.45% (20/(300 + 1080) × 100).

When the content of the (meth)acrylic acid ester-derived resin component is within the above range, foam molding of foam particles having a high content of the polypropylene-based resin can be easily performed even if the vapor pressure of the heating medium during foam molding is not high. However, the heat resistance of the foam molded body may tend to decrease. Therefore, it is most preferable that the (meth)acrylic acid ester-derived resin component is not contained.

The content of the polystyrene-based resin in the composite resin particles can be, for example, 50 to 95 mass% or 50 to 90 mass%, and is preferably 55 to 85 mass%, and more preferably 60 to 85 mass%, based on the total mass of the composite resin particles. Setting the content of the polystyrene-based resin to be within this range is advantageous in terms of excellent moldability at low vapor pressure and excellent heat resistance.

In the composite resin particles, the ratio of the total mass content of the polypropylene-based resin, polyethylene-based resin, and carbon component to the mass content of the polystyrene-based resin may range from, for example, 5:95 to 50:50 or 10:90 to 50:50, preferably 15:85 to 45:55, and more preferably 15:85 to 40:60.

Surface Absorbance Ratio ($R_S$) of Composite Resin Particles

To obtain the surface absorbance ratio, first, the surface of the composite resin particles is analyzed using attenuated total reflection (ATR) infrared spectroscopy. From the obtained infrared absorption spectrum, absorbance values at 1380 cm$^{-1}$ (D1380) and 698 cm$^{-1}$ (D698) are determined. The value calculated by using the determined absorbance values in the formula D698/D1380 is defined as the surface absorbance ratio. Specifically, the surface absorbance ratio is specified by the method described in the Examples. D698 is the absorbance in an absorption spectrum due to the out-of-plane bending vibration of the benzene ring in the polystyrene-based resin. Therefore, D698 obtained from a surface sample reflects the proportion of the polystyrene-based resin on the surface of the composite resin particles. D1380 is the absorbance in an absorption spectrum due to the methyl group in the polypropylene-based resin. Therefore, D1380 obtained from the surface sample reflects the proportion of the polypropylene-based resin on the surface of the composite resin particles.

The surface absorbance ratio may be 1.0 to 5.0 or the like, preferably 1.5 to 5.0, more preferably 1.5 to 4.0, and particularly preferably 1.5 to 3.5. A surface absorbance ratio within this range is advantageous in terms of excellent moldability at low vapor pressure and excellent heat resistance.

Central Area Absorbance Ratio ($R_C$) of Composite Resin Particles

The central area of a composite resin particle is within a range of about $\pm 20$ $\mu$m from the center of the composite resin particle. The composite resin particle is sliced approximately through its center to obtain a slice sample with a thickness of about 10 $\mu$m, and the particle central area of the sample (the area obtained by drawing a circle with a radius of 20 $\mu$m centered at the particle center) is analyzed using infrared spectroscopy in the same manner as for the surface absorbance ratio to thus determine absorbance values at 1380 cm$^{-1}$ (D1380) and 698 cm$^{-1}$ (D698). The value calculated by using the determined absorbance values in the formula D698/D1380 is defined as the central area absorbance ratio. Specifically, the central area absorbance ratio is specified by the method described in the Examples.

The central area absorbance ratio may be 2.0 to 30.0, 3.0 to 20.0, or the like, preferably 4.0 to 10.0, more preferably 5.0 to 9.0, and particularly preferably 6.0 to 8.0. A central area absorbance ratio within this range is advantageous in terms of excellent moldability at low vapor pressure and excellent heat resistance.

Ratio of Surface Absorbance Ratio ($R_S$) to Central Area Absorbance Ratio ($R_C$) ($R_S/R_C$)

The ratio of the surface absorbance ratio to the central area absorbance ratio ($R_C$) may be 0.10 to 0.90, 0.10 to 0.80, or the like, preferably 0.10 to 0.70, more preferably 0.20 to 0.70, and even more preferably 0.20 to 0.60. $R_S/R_C$ within this range is advantageous in terms of excellent moldability at low vapor pressure and excellent heat resistance.

Flame Retardant

The composite resin particles may contain a flame retardant. Since the composite resin particles have relatively high flame-retardant properties even without containing a flame retardant, it is not necessary to contain a flame retardant.

Examples of flame retardants include known halogen-based flame retardants, phosphorus-based flame retardants, inorganic flame retardants, and the like. The flame retardants may be used singly or in combination of two or more. When the composite resin particles contain a flame retardant, the flame retardant is preferably a halogen-based flame retardant, such as a bromine-based flame retardant, a chlorine-based flame retardant, or a chlorine-containing and bromine-containing flame retardant, in terms of imparting high flame retardancy to the foam molded body with a small amount of the flame retardant.

Examples of halogen-based flame retardants include tetrabromobisphenol A and derivatives thereof (e.g., tetrabromobisphenol A-bis(2,3-dibromo-2-methylpropyl ether), tetrabromobisphenol A-bis(2,3-dibromopropyl ether), and tetrabromobisphenol A-bis(allyl ether)), triallyl isocyanurate hexabromide, tris(2,3-dibromopropyl)isocyanurate, tetrabromocyclooctane, hexabromocyclododecane, and the like.

In general, when a halogen-based flame retardant is contained, the flame retardancy of the foam molded body is improved, while the heat resistance of the foam molded body tends to decrease. However, the foam molded body of the present invention has a low heating dimensional change rate even when a halogen-based flame retardant is contained, and thus has sufficient heat resistance.

The content of the flame retardant can be, for example, 1.5 to 6.0 mass%, preferably 1.5 to 4.0 mass%, and more preferably 2.0 to 3.5 mass%, based on the mass of the composite resin particles excluding the flame retardant. Setting the content of the flame retardant to be within this range is advantageous because the flame retardancy and heat resistance of the foam molded body can both be achieved at high levels.

When the composite resin particles contain a flame retardant, it is preferable to contain a flame retardant aid. The presence of a flame retardant aid can further enhance flame retardancy derived from the flame retardant. Examples of flame retardant aids include organic peroxides, such as dicumyl peroxide (DCP), cumene hydroperoxide, and diacyl peroxide; 2,3-dimethyl-2,3-diphenylbutane (also known as biscumyl), 3,4-dimethyl-3,4-diphenylhexane, and the like.

The content of the flame retardant aid can be, for example, 50 parts by mass or less, preferably 10 to 40 parts by mass, and more preferably 15 to 25 parts by mass, based on 100 parts by mass of the flame retardant. When the content of the flame retardant aid is within this range, the decrease in the strength and heat resistance of the foam molded body can be suppressed.

The composite resin particles may have any known shape. The shape is preferably cylindrical, nearly spherical, or spherical, and more preferably nearly spherical or spherical in terms of the good filling ability of foam particles formed from the composite resin particles into the mold.

The average particle size of the composite resin particles is preferably 0.6 mm to 1.8 mm, in terms of the good filling ability of the foam particles into the mold.

Method for Producing Composite Resin Particles

The method for producing composite resin particles is not particularly limited as long as the composite resin particles described above can be obtained. The method may be a commonly used seed polymerization method. For example, composite resin particles can be obtained by step (A) of impregnating seed particles containing a polypropylene-based resin, a polyethylene-based resin, and a carbon component with a styrene-based monomer and polymerizing the styrene-based monomer to obtain carbon-component-containing composite resin particles. In the present invention, in step (A), it is preferable to gradually add the styrene-based monomer (for example, at a rate of 0.03 parts by weight/second or less per 100 parts by weight of the seed particles) in the presence of a water-soluble polymerization inhibitor, in terms of easily achieving the absorbance ratio mentioned above, and in terms of excellent moldability at low vapor pressure and excellent heat resistance.

Step (A) can be performed in an aqueous medium in the presence of a water-soluble polymerization inhibitor. Step (A) can be performed in the presence or absence of a polymerization initiator. Therefore, in step (A), the seed particles are impregnated with the styrene-based monomer in an aqueous medium in the presence of a water-soluble polymerization inhibitor and in the presence or absence of a polymerization initiator, and then the resulting product is heated to the polymerization temperature of the monomer to thus obtain composite resin particles.

An example of the method for producing composite resin particles is described below.

First, seed particles, a styrene-based monomer, and optionally a polymerization initiator are dispersed in an aqueous medium, in which a water-soluble polymerization inhibitor is then dissolved.

The water-soluble polymerization inhibitor is not particularly limited as long as it is a polymerization inhibitor used in the related technical field. Examples include nitrites, such as sodium nitrite, potassium nitrite, ammonium nitrite, calcium nitrite, silver nitrite, strontium nitrite, cesium nitrite, barium nitrite, magnesium nitrite, lithium nitrite, and dicyclohexylammonium nitrite; thiocyanates, such as ammonium thiocyanate, zinc thiocyanate, sodium thiocyanate, potassium thiocyanate, and aluminum thiocyanate; water-soluble sulfur-containing organic compounds, such as mercaptoethanol, monothiopropylene glycol, thioglycerol, thioglycolic acid, thiohydroacrylic acid, thiolactic acid, thiomalic acid, thioethanolamine, 1,2-dithioglycerol, and 1,3-dithioglycerol; ascorbic acid; sodium ascorbate; and the like. Among these, nitrites, which have little impact on the physical properties of the composite resin particles after polymerization, are preferred, and sodium nitrite is particularly preferred. These water-soluble polymerization inhibitors may be used singly or in a combination of two or more.

The amount of the water-soluble polymerization inhibitor used is preferably 10 ppm to 2000 ppm, and more preferably 30 ppm to 500 ppm, based on the mass of the seed particles.

As the polymerization initiator, one generally used as an initiator for suspension polymerization of styrene-based monomers can be suitably used. Examples include organic peroxides, such as benzoyl peroxide, di-t-butyl peroxide, t-butyl peroxybenzoate, dicumyl peroxide, 2,5-dimethyl-2,5-di-t-butyl peroxyhexane, t-butyl peroxy-3,5,5-trimethylhexanoate, and t-butyl peroxy-2-ethylhexyl carbonate; azo compounds, such as azobisisobutyronitrile and azobisdimethylvaleronitrile; and the like. One, two, or more of these polymerization initiators may be used. Dicumyl peroxide can also act as a flame retardant aid.

The amount of the polymerization initiator used is preferably 0.01 to 0.9 parts by mass, and more preferably 0.1 to 0.5 parts by mass, based on 100 parts by mass of the styrene-based monomer.

Examples of the aqueous medium include water and a mixed medium of water and a water-soluble solvent (e.g., lower alcohol).

A dispersant may be added to the aqueous medium, as needed. The dispersant is not particularly limited, and any known dispersant can be used. Specific examples include poorly soluble inorganic substances, such as calcium phosphate, magnesium pyrophosphate, sodium pyrophosphate, and magnesium oxide. Further, a surfactant, such as sodium dodecylbenzenesulfonate, may be added to the aqueous medium.

Next, while adding the styrene-based monomer to the obtained dispersion, heating is performed to a temperature at which the styrene-based monomer does not substantially undergo polymerization (e.g., 80 to 130°C), thereby impregnating the seed particles with the styrene-based monomer. The addition rate of the styrene-based monomer here may be, for example, 0.03 parts by mass/second or less, preferably 0.001 to 0.03 parts by mass/second, and more preferably 0.01 to 0.02 parts by mass/second, per 100 parts by mass of the seed particles. Setting the addition rate of the styrene-based monomer to be within this range makes it easy to achieve the surface absorbance ratio ($R_S$) mentioned above (e.g., 1.0 to 5.0), the central area absorbance ratio ($R_C$) mentioned above (e.g., 2.0 to 30.0), and the ratio of the surface absorbance ratio ($R_S$) to the central area absorbance ratio ($R_C$) ($R_S/R_C$) mentioned above (e.g., 0.10 to 0.90). The time for impregnating the seed particles with the styrene-based monomer may be appropriately determined according to the desired addition rate and the desired addition amount.

Then, the styrene-based monomer is polymerized. The polymerization is not particularly limited. It is preferable to perform polymerization at 115°C to 150°C, preferably 120°C to 145°C, for 1.5 to 5 hours. The polymerization is generally performed in a closed container that can be pressurized. It is preferable to perform impregnation and polymerization of the styrene-based monomer multiple times (e.g., two times, three times, or four times, preferably two times). By performing impregnation and polymerization multiple times, the shape of the resulting composite resin particles can be made spherical in the first polymerization of the styrene-based monomer, and the amount of polystyrene to be composited can be adjusted in the second or subsequent polymerization of the styrene-based monomer. Further, in consideration of the decomposition temperature of the polymerization initiator, polymerization may be performed while the styrene-based monomer is impregnated, instead of starting polymerization after the seed particles are impregnated with the styrene-based monomer.

In step (A), the amount of the styrene-based monomer used is preferably such that the ratio of the mass of the seed particles to the amount of the styrene-based monomer used is 5/95 to 50/50. The content of the polystyrene-based resin in the composite resin particles is an amount corresponding to the amount of the styrene-based monomer used. Therefore, the ratio of the mass content of the seed particles in the composite resin particles to the mass content of the polystyrene-based resin in the composite resin particles is preferably 5/95 to 50/50. The amount of the styrene-based monomer used or the mass content of the polystyrene-based resin within the above range is advantageous in terms of excellent moldability at low vapor pressure and excellent heat resistance. The range is more preferably 10/90 to 50/50, even more preferably 15/85 to 45/55, and particularly preferably 15/85 to 40/60.

Composite resin particles containing a flame retardant or containing a flame retardant and a flame retardant aid can be produced by a method in which seed particles are impregnated with the flame retardant or with the flame retardant and the flame retardant aid, together with the styrene-based monomer, a method in which particles after polymerization are impregnated with them, or the like.

Expandable Particles

Expandable particles contain the composite resin particles described above and a foaming agent.

Examples of usable foaming agents include organic gases, such as propane, n-butane, isobutane, n-pentane, isopentane, cyclopentane, n-hexane, and isohexane; and inorganic gases, such as carbon dioxide, nitrogen, helium, argon, and air. These foaming agents may be used singly or in a mixture of two or more. The organic gas is preferably any of n-butane, isobutane, n-pentane, and isopentane, or a combination thereof.

The content of the foaming agent in the expandable particles is preferably 5 to 25 parts by mass based on 100 parts by mass of the composite resin particles.

Since foam particles obtained by pre-foaming expandable particles are reduced in foam moldability due to the escape of gas, it was sometimes difficult to ensure a long time from the production of the foam particles to the filling of the foam particles in the mold for molding. However, when n-pentane, isopentane, cyclopentane, n-hexane, isohexane, or the like is used as a foaming agent, the escape of gas from the foam particles is suppressed, and so the time from the production of the foam particles to the filling of the foam particles in the mold for molding can be made longer. Therefore, when the foam particles of the present invention contain n-pentane, isopentane, cyclopentane, n-hexane, isohexane, or the like as a foaming agent, there are advantages that the time until filling can be lengthened, and that desired flame retardancy can be ensured even if the flame retardancy of the foam molded body is reduced due to the residual foaming agent. That is, the degree of freedom in selecting the type and amount of foaming agent can be increased by using the composite resin particles of the present invention.

The expandable particles can be obtained, for example, by impregnating the composite resin particles during or after polymerization with a foaming agent. Impregnation can be performed by a method known per se. For example, impregnation during polymerization can be performed by performing a polymerization reaction in a closed container and pressing a foaming agent into the container. Impregnation after polymerization can be performed by, for example, pressing a foaming agent into a closed container containing the composite resin particles.

Foam Particles

Foam particles (generally also referred to as "pre-foam particles") are particles obtained by preliminarily foaming composite resin particles. For example, foam particles can be obtained by foaming expandable particles impregnated with a foaming agent. Since foam particles produced from the composite resin particles of the present invention are fused together by a medium having low vapor pressure (e.g., water vapor), the energy required for foam molding can be reduced, the equipment required for foam molding can be simplified, and therefore, the cost required for foam molding can be reduced.

The bulk density of the foam particles may be, for example, 10 kg/m$^3$ to 200 kg/m$^3$, and is preferably 15 kg/m$^3$ to 200 kg/m$^3$, more preferably 20 kg/m$^3$ to 100 kg/m$^3$, and even more preferably 20 kg/m$^3$ to 50 kg/m$^3$. A bulk density within this range is advantageous in terms of the high strength of the foam molded body and the light weight of the foam molded body.

The shape of the foam particles is preferably spherical or nearly spherical. The average particle size thereof is preferably 1.0 mm to 9.0 mm, and more preferably 2.0 mm to 6.4 mm.

The foam particles can be obtained by foaming expandable particles to a desired bulk density by a known method. Foaming can be achieved by foaming expandable particles using heating vapor of a gauge pressure of preferably 0.05 MPa to 0.20 MPa, more preferably 0.06 MPa to 0.12 MPa, and even more preferably 0.06 MPa to 0.11 MPa.

Foam Molded Body

The foam molded body is a foam body composed of a fusion body of foam particles, and is obtained, for example, by foam-molding the foam particles described above. By using the composite resin particles described above as a raw material, the foam molded body can be produced at low vapor pressure, and the produced foam molded body has high strength and sufficient heat resistance and flame retardancy.

The density of the foam molded body is preferably 15 kg/m$^3$ to 200 kg/m$^3$, more preferably 20 kg/m$^3$ to 100 kg/m$^3$, and even more preferably 20 kg/m$^3$ to 50 kg/m$^3$. When the density is within this range, excellent lightweight properties and strength can be achieved. The density of the foam molded body can be specified by the method described in the Examples.

Regarding the blackness of the foam molded body, the lightness L* value may be 40 or less, preferably 20 to 40, and more preferably 20 to 35. A lightness L* value within this range is advantageous in terms of excellent blackness. The lightness L* value can be determined by color difference measurement based on JIS Z 8729: 2004 "Method of displaying color - L*a*b* color system." More specifically, the lightness L* value can be specified by the method described in the Examples.

A foam molded body having a heating dimensional change rate of 1.2% or less can be evaluated as having good heat resistance. The heating dimensional change rate can be, for example, 1.1% or less or 0.5 to 1.1%, preferably 0.6 to 1.1%, and more preferably 0.6 to 1.0%. The heating dimensional change rate can be specified by the method described in the Examples.

Regarding the flame retardancy of the foam molded body, the burning rate specified in the Federal Motor Vehicle Safety Standard FMVSS 302, particularly by the method described in the Examples, is preferably 80 mm/min or less, more preferably 40 mm/min or less, and even more preferably 0 mm/min (self-extinguishing).

The foam molded body can be obtained by filling a mold of a foam molding machine with foam particles, thermally fusing the foam particles together while foaming the foam particles by heating. Water vapor can be suitably used as the medium for heating.

Since the foam particles of the present invention are sufficiently foamed and fused even in a medium (e.g., water vapor) at low pressure (e.g., a gauge pressure of 0.05 MPa to 0.16 MPa, 0.05 MPa to 0.15 MPa, 0.05 MPa to 0.12 MPa, 0.05 MPa to 0.11 MPa, 0.05 MPa to 0.10 MPa, or 0.06 MPa to 0.10 MPa), the energy required for foam molding can be reduced, the equipment required for foam molding can be simplified, and as a result, the cost required for foam molding can be reduced (i.e., excellent productivity).

Other production conditions, such as process temperature, process pressure, and process time in each production process, are appropriately set according to the production equipment, raw materials, and the like to be used.

The foam molded body can be used for, for example, automobile components, cushioning materials, packing materials, building materials, shoe members, sporting goods, and the like. Specific examples include tire core materials of bicycles, wheelchairs, etc.; interior materials, seat core materials, shock-absorbing members (e.g., bumper core materials), vibration-absorbing members, etc. for transportation equipment, such as automobiles, railway vehicles, and airplanes; midsole members, insole members, or outsole members of shoes; core materials of hitting equipment for sporting goods, such as rackets and bats; protective equipment of sporting goods, such as pads and protectors; medical, nursing, welfare, or health-care goods, such as pads and protectors; fenders; floats; toys; floor foundation materials; wall materials; beds; cushions; transportation containers for electronic components, various industrial materials, and foods; and the like.

Preferred are automotive interior materials, shock-absorbing members, vibration-absorbing members, and component packaging materials.

Examples

An embodiment of the present invention will be described in more detail below with reference to Examples and the like; however, the present invention is not limited thereto.

The methods for specifying various physical properties and the like in the Examples etc. are described below.

Melt Mass Flow Rate (MFR) of Polypropylene-based Resin and Ethylene-based copolymer

MFR was measured according to JIS K6922-1: 1998 at 190°C under a load of 2.16 kg.

Melting Point of Resin

The melting point of resin was measured by the method described in JIS K7122: 1987 "Testing Methods for Heat of Transitions of Plastics." Specifically, using an RDC220 differential scanning calorimeter device (produced by Seiko Instruments Inc.), a measurement container was filled with 7 mg of a sample, the temperature was increased, decreased, and increased between room temperature and 220°C at a heating and cooling speed of 10°C/min under a nitrogen gas flow rate of 30 mL/min, and the melting peak temperature of the DSC curve in the second temperature increase was defined as the melting point. When there were two or more melting peaks, the lower peak temperature was defined as the melting point.

Surface Absorbance Ratio ($R_S$) of Composite Resin Particles

The surface absorbance ratio (D698/D1380) of composite resin particles was measured in the following manner.

Ten composite resin particles were randomly selected. The surface of each particle was analyzed by ATR infrared spectroscopy to obtain an infrared absorption spectrum. In this analysis, infrared absorption spectra were obtained in the depth range of up to 1 $\mu$m from the measurement surface of the sample.

The absorbance ratio (D698/D1380) of each particle was calculated from their infrared absorption spectra. The minimum and maximum absorbance ratios were excluded, and the arithmetic average of the remaining eight absorbance ratios was defined as the surface absorbance ratio ($R_S$).

The method for specifying the absorbance is described here in more detail.

The surface of the measurement sample was analyzed by infrared spectroscopy under the following conditions to obtain an infrared absorption spectrum. From the obtained infrared absorption spectrum, D698 and D1380 peak heights were determined, and the polystyrene-based resin ratio was calculated from a calibration curve prepared using standard samples.

Infrared Spectroscopy Conditions

- Measurement device: a Thermo Scientific Nicolet iS5 FT-IR spectrophotometer and a Thermo Scientific single-reflection horizontal Smart iTR (ATR)
- ATR crystal: Ge (angle: 45°)
- Measurement method: single-reflection ATR method
- Measurement wavenumber range: 4000 $cm^{-1}$ to 675 $cm^{-1}$
- Wavenumber dependence of measurement depth: not corrected
- Detector: deuterated triglycine sulfate (DTGS) detector and KBr beam splitter
- Resolution: 4 $cm^{-1}$
- Number of accumulations: 16 (same as for background measurement)

The absorbance value D698 obtained from the infrared absorption spectrum is the absorbance in the wavenumber region of 698 $cm^{-1}$ $\pm$ 5 $cm^{-1}$ in the absorption spectrum due to the out-of-plane bending vibration of the benzene ring contained in the styrene-based resin. The absorbance D698 means the maximum absorbance between 710 $cm^{-1}$ and 685 $cm^{-1}$ when the straight line connecting 1130 $cm^{-1}$ and 880 $cm^{-1}$ is used as the baseline. In this absorbance measurement, no peak separation is performed even when another overlapping absorption peak is present at 698 cm$^{-1}$.

The absorbance value D1380 obtained from the infrared absorption spectrum is the absorbance in the wavenumber region of 1380 cm$^{-1}$ $\pm$ 5 cm$^{-1}$ in the absorption spectrum due to the symmetric bending vibration of CH$^3$ methyl contained in the polypropylene-based resin. The absorbance D1380 means the maximum absorbance between 1400 cm$^{-1}$ and 1350 cm$^{-1}$ when the straight line connecting 1410 cm$^{-1}$ and 1275 cm$^{-1}$ is used as the baseline. In this absorbance measurement, no peak separation is performed even when another overlapping absorption peak is present at 1380 cm$^{-1}$.

Preparation of Standard Sample

Standard samples (a polystyrene-based resin/a mixture of polypropylene and an ethylene-vinyl acetate copolymer) were prepared to have the following composition ratios. In the mixture of polypropylene and an ethylene-vinyl acetate copolymer, the mixing ratio of the polypropylene to the ethylene-vinyl acetate copolymer was 8/2.

Composition ratio (polystyrene/a mixture of polypropylene and ethylene vinyl acetate copolymer; mass ratio): 2/8, 4/6, 5/5, 6/4, 7/3, 8/2, and 9/1

These materials were each heated and kneaded under the following conditions in a small injection molding machine and molded into a cylindrical shape with a diameter of 25 mm and a height of 2 mm to obtain standard samples.

For the small injection molding machine, for example, a machine available from Custom Scientific Instruments, Inc., under the product name CS-183 was used, and molding can be performed, for example, under the following conditions.

Injection molding conditions: heating temperature: 200 to 250°C, kneading time: 10 minutes

Creating a Calibration Curve

The surface of each of the standard samples was analyzed by infrared spectroscopy to obtain infrared absorption spectra.

From the infrared absorption spectra obtained in each measurement, the absorbance ratios of the standard samples having the above ratios were determined using the above measurement device under the above measurement conditions, and a calibration curve was created by plotting the relationship between the polystyrene-based resin ratio (mass%) and the absorbance ratio (D698/D1380).

Central Area Absorbance Ratio ($R_C$) of Composite Resin Particles

The central area absorbance ratio of composite resin particles was measured in the following manner.

Ten randomly selected particles were fixed onto an epoxy resin stand. Next, each particle was sliced with a diamond knife through approximately the center into a slice of about 10 $\mu$m thickness using an ultramicrotome (Leica Ultracut Uct, Leica Microsystems) to obtain slice samples. The obtained slice samples were each sandwiched between two barium fluoride crystals (Pier Optics Co., Ltd.) to prepare measurement samples.

An image of each slice sample was captured by a CCD attached to the measurement device below. The image was captured with the movement direction of the blade of the ultramicrotome taken as the Y axis and the perpendicular direction taken as the X axis. The particle in the slice sample was slightly crushed in the movement direction of the blade. By aligning the Y axis of the captured image with the movement direction of the blade, the variation in the measured absorbance ratio was suppressed.

The central area absorbance values D698 and D1380 were determined using a device available from Perkin-Elmer under the product name Spectrum Spotlight 300 High-Speed IR Imaging System. Using this device, images of the slice samples were obtained under the following conditions. From the obtained images, infrared absorption spectra at each point were obtained under the following measurement conditions.

Central Area Measurement Conditions

Mode: transparent
Pixel size: 6.25 $\mu$m
Measurement area: 4000 cm$^{-1}$ to 650 cm$^{-1}$
Detector: MCT
Resolution: 8 cm$^{-1}$
Scans/pixel: 2

In the captured image, as shown in Fig. 1, lines were drawn connecting the minimum and maximum X-coordinate values, and the minimum and maximum Y-coordinate values on the Y-axis, and the intersection of these lines, was defined as the center point A. In the image processing, the X-coordinate and Y-coordinate values of the center point were set within a range of $\pm$ 20 $\mu$m from the center point A.

Next, a straight line was drawn in the image, passing through the center point A and parallel to the X-axis. The point at which the straight line intersects with the end position (maximum value on the X-axis) where the particle (resin) is present was defined as point D. The infrared absorption spectra were extracted along the line connecting point A and point D at intervals of 12 $\pm$ 2 $\mu$m based on the X-coordinate.

From the extracted infrared absorption spectra, the absorbance values D698 and D1380 were read, and the absorbance ratio (D698/D1380) at the central area was calculated. The arithmetic average of the calculated individual absorbance ratios of 10 particles was defined as the absorbance ratio.

Number Average Molecular Weight (Mn) and Mass Average Molecular Weight (Mw) of Ethylene-based Copolymer

The molecular weight was specifically measured in the following manner. 6 mL of O-dichlorobenzene was added to a container containing 6 mg of a sample, and the container was sealed tightly to prepare a solution. The solution was prepared by dissolving the sample by heating at 160°C for 1 hour using DF-8200 produced by Tosoh Corporation. This solution was used as a measurement sample, and the measurement was performed by gel permeation chromatography under the following measurement conditions. Standard polystyrene was measured in advance, and the average molecular weight (Mn, Mw) of the sample was obtained from the calibration curve of standard polystyrene prepared in advance.

Device used: HLC-8321GPC/HT gel permeation chromatograph produced by Tosoh Corporation
Guard column: TSKgel guard column HHR(30)HT2 (7.5 mm I.D. $\times$ 7.5 cm $\times$ 1 column) produced by Tosoh Corporation
Columns: TSKgel GMHHR-H(20)HT2 (7.8 mm I.D. $\times$ 30 cm) produced by Tosoh Corporation $\times$ 3 columns
Mobile phase: O-dichlorobenzene
Sample flow rate: 1.0 mL/min
Reference flow rate: 0.5 mL/min
Detector: RI
Sample concentration: 0.1 wt%
Injection volume: 300 $\mu$L
Measurement time: 34 min

Set Temperature for Each Part of the Device

Solvent stocker: 40°C
Column oven (column temperature): 160°C
Sample table: 160°C
Injection valve: 160°C
Detector: 160°C

The standard polystyrene samples for the calibration curve used were the High Polymer Kit and Oligomer Kit (product names, produced by Tosoh Corporation) having a mass average molecular weight of 8,420,000, 5,480,000, 2,110,000, 1,090,000, 706,000, 427,000, 190,000, 96,400, 37,900, 17,400, 5,060, 2,550, 1,013, or 589.

After the standard polystyrenes for the calibration curve were grouped into A (8,420,000, 1,090,000, 190,000, 17,400, 1,013), B (5,480,000, 706,000, 96,400, 5,060, 589), and C (2,110,000, 427,000, 37,900, 2,550), A was weighed (each 10 mg) and then dissolved in 30 mL of O-dichlorobenzene. B and C were also weighed (each 10 mg) and then dissolved in 30 mL of O-dichlorobenzene. The standard polystyrene calibration curve was obtained by preparing a calibration curve (cubic formula) from the retention time obtained after injection of 300 $\mu$L of each solution of A, B, and C and measurement. The average molecular weight was calculated using the calibration curve.

Bulk Density of Foam Particles

A measuring cylinder was filled with foam particles up to a scale of 500 cm$^3$. However, when the measuring cylinder was visually observed horizontally and even one of the foam particles reached the scale of 500 cm$^3$, the filling was completed. Next, the mass of the foam particles filled in the measuring cylinder was weighed with two significant digits after the decimal point, and the mass was defined as W (g). The bulk density of the foam particles was calculated according to the following formula.

$$\text{Bulk density } (kg/m^3) = (W/500) \times 1000$$

Moldability of Foam Molded Body; Water Vapor Pressure

Composite resin foam particles were placed in a mold (size: 300 mm × 400 mm × 30 mm) of a foam molding machine, and the composite resin foam particles were thermally fused together while foaming the composite resin foam particles by heating with water vapor.

During heating with water vapor (50 seconds), the fusion rate of the obtained foam molded bodies was determined for each case in which the pressure of water vapor was changed from 0.07 MPa to 0.25 MPa at intervals of 0.01 MPa. Moldability was evaluated at the lowest vapor pressure value (minimum vapor pressure value) at which the fusion rate was 90% or more. When a foam molded body with good fusion can be obtained at low vapor pressure, the molding equipment can be simplified, and the production energy can be reduced, resulting in low production cost and improved productivity.

If a foam molded body with a fusion rate of 90% or more can be obtained at a vapor pressure of 0.12 MPa or less, preferably 0.11 MPa or less, a foam molded body with good fusion can be obtained at low regulated vapor pressure, resulting in good moldability and high productivity.

Fusion Rate of Foam Molded Body

Using a rectangular parallelepiped foam molded body having a thickness of 30 mm and an upper surface with a length of 400 mm and a width of 300 mm, a cut line with a length of 300 mm and a depth of about 5 mm was made by using a utility knife on the upper surface along the lateral direction. The foam molded body was divided into two along the cut line, and a fracture surface was observed. An arbitrary area containing 50 or more foam particles was set on the fracture surface, and the number (a) of foam particles broken not on the surface but inside of the foam particles (strongly heat-fused foam particles) and the number (b) of foam particles broken at the interface between the foam particles (weakly heat-fused foam particles) were counted within this area, and the fusion rate (%) was calculated according to the following formula.

$$\text{Fusion rate } (\%) = (a/(a + b)) \times 100$$

Density of Foam Molded Body

The mass (a) and volume (b) of a test piece (75 mm × 300 mm × 35 mm) cut from a foam molded body (dried at 50°C for 4 hours or more after molding) were each measured to three or more significant digits, and the density (g/cm³) of the foam molded body was determined according to the formula (a)/(b).

Lightness L* of Foam Molded Body

The lightness L* of a foam molded body was evaluated by color difference measurement based on JIS Z 8729: 2004 "Method of displaying color - L*a*b* color system." For the measurement, a chroma meter (model: CR-400, produced by Konica Minolta, Inc.) and a standard white calibration plate (Y: 94.3, x: 0.3144, y: 0.3208) for standardization were used. Specifically, ten randomly selected points, each with a measurement area of a diameter of 8 mm, on the longitudinal and lateral surfaces of the foam molded body were measured, and the average value was calculated.

Heating Dimensional Change Rate of Foam Molded Body

The heating dimensional change rate of the foam molded body was measured by the B method described in JIS K 6767: 1999 "Cellular plastics -Polyethylene- Methods of test." A test piece with a length of 150 mm, width of 150 mm, and height of 20 mm was cut out from the foam molded body. On the surface of the test piece, three straight lines having a length of 50 mm oriented in the longitudinal direction were drawn parallel to each other at intervals of 50 mm, and three straight lines having a length of 50 mm oriented in the lateral direction were drawn parallel to each other at intervals of 50 mm. Thereafter, the test piece was left in a hot-air circulation dryer at 80°C for 168 hours, then taken out from the dryer and left in a standard state (20 ± 2°C, humidity: 65 ± 5%) for 1 hour. Next, the length (mm) of each of the six straight lines drawn on the surface of the test piece was measured, and an arithmetic average value L1 of the lengths of the six straight lines was calculated. The degree of change S was calculated based on the following formula, and an absolute value of the degree of change S was defined as the heating dimensional change rate (%).

$$S = 100 \times (L1-50)/50$$

A heating dimensional change rate of 1.2% or less can be evaluated as meaning that the dimensional change rate is low and dimensional stability is good, and 1.1% or less can be evaluated as meaning that more excellent dimensional stability is provided.

Burning Rate and Flame Retardancy of Foam Molded Body

The burning rate (mm/min) was measured by the method according to the Federal Motor Vehicle Safety Standard FMVSS 302. The test piece (bulk foaming factor: 40 times) had a size of 350 mm × 100 mm × 12 mm (thickness), and skin was present on at least two faces of 350 mm × 100 mm.

The flame retardancy was classified into 0 mm/min, 40 mm/min or less, 80 mm/min or less, or over 80 mm/min, based on the burning rate.

If the fire was extinguished before the measurement start point was reached, the burning rate was assumed to be 0 mm/min, and the foam molded body was evaluated as self-extinguishing.

Polypropylene-based Resin

The polypropylene-based resins (PP) used in the Examples etc. are as follows. Table 1 shows the physical properties of the polypropylene-based resins.

F744NP: PP random copolymer (produced by Prime Polymer Co., Ltd., ethylene content: 7 mass%)
PL500A: PP homopolymer (produced by SunAllomer Ltd.)

Table 1

|  | PP | PP |
|---|---|---|
| Model number | F744NP | PL500A |
| Resin type | Random PP | Homopolymer |
| Melting point (°C) | 140 | 162 |
| MFR (g/10 min) | 7 | 3 |

Ethylene-based Copolymer

The ethylene-based copolymers used in the Examples etc. are as follows. Table 2 shows the physical properties of these resins.

EF0505: ethylene-vinyl acetate copolymer (produced by Asahi Kasei Corporation, vinyl acetate content: 4.7 mass%)
A1100: ethylene-ethyl acrylate copolymer (produced by Japan Polyethylene Corporation, model number: A1100, ethyl acrylate content: 10 mass%)

Table 2

|  | EVA | EEA |
|---|---|---|
| Model number | EF0505 | A1100 |
| Melting point (°C) | 108 | 104 |
| MFR (g/10 min) | 0.5 | 0.4 |
| Molecular weight ratio Mw/Mn | 5.3 | 3.0 |

Carbon Masterbatch (Carbon Component and Polyethylene-based Resin)

In the Examples etc., the carbon component was added by adding a carbon masterbatch (carbon MB) to other resins.

10H381: carbon masterbatch (produced by Dainichiseika Color & Chemicals Mfg. Co., Ltd., product name: PPRM-10H381, containing 45 mass% of carbon black and 55 mass% of linear low-density polyethylene)
MHRB013: carbon masterbatch (produced by Yuaisya Corporation, product name: MHRB013, containing 30 mass% of carbon black and 70 mass% of low-density polyethylene)

Other materials used in the Examples etc. are listed below.

TAIC-6B: tris(2,3-dibromopropyl)isocyanurate (produced by Nihon Kasei Co., Ltd.)
Biscumyl: 2,3-dimethyl-2,3-diphenylbutane (produced by Kayaku Nouryon Corporation, model number: Perkadox 30)

Example 1

Preparation of Seed Particles

F744NP as a polypropylene-based resin (A), EF0505 as an ethylene-based copolymer (B1), and 10H381 as a carbon MB (C) at a mass ratio of 71:17.8:11.2 were placed in a tumbler mixer and mixed for 10 minutes to obtain a resin mixture (base resin).
The obtained resin mixture was supplied to an extruder, melt-kneaded at a temperature of 230 to 250°C, granulated by an underwater cutting method, and cut into oval-spherical (egg-shaped) particles to obtain polypropylene-based resin particles (seed particles, average mass: 0.6 mg) modified with low-density polyethylene.

Production of Composite Resin Particles

First Step

40 g of magnesium pyrophosphate (dispersant), 0.6 g of sodium dodecylbenzenesulfonate (surfactant), 0.15 g of sodium nitrite, and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 70°C to obtain a suspension. Further, while maintaining the suspension at 70°C, a solution obtained by dissolving 0.6 g of dicumyl peroxide (polymerization initiator) in 300 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Second Step

Next, a dispersion prepared by dispersing 3 g of sodium dodecylbenzenesulfonate and 0.15 g of sodium nitrite in 20 g of pure water was added dropwise over 10 minutes to the reaction liquid cooled to 122°C. Then, a solution obtained by dissolving 5 g of dicumyl peroxide (polymerization initiator) in 1100 g of a styrene monomer was added dropwise at a rate corresponding to 0.02 parts by mass/sec with respect to 100 parts by mass of the seed particles. After dropping, the resultant was maintained at 122°C for 1 hour, thereby impregnating the modified polypropylene-based resin particles with the styrene monomer. After impregnation, the resultant was heated to 140°C and maintained at this temperature for 3 hours for polymerization (second polymerization).
60 g of TAIC-6B as a flame retardant and 15 g of biscumyl as a flame retardant aid were put into the reaction liquid. After putting them in, the temperature of the reaction system was raised to 140°C, and stirring was continued for 3 hours, thereby producing flame retardant-containing composite resin particles (ratio of the mass of seed particles to the mass of polystyrene = 30:70). Then, the composite resin particles were cooled to 30°C or lower and taken out from the autoclave. The obtained composite resin particles were subjected to various tests. The results are shown in Table 3.

Production of Expandable Particles

2 kg (100 parts by mass) of the composite resin particles, 2 kg of water, and 2.0 g of sodium dodecylbenzenesulfonate (surfactant) were placed in an autoclave equipped with a stirrer having an inner volume of 5 liters. Further, 300 g (520 mL, 15 parts by mass based on 100 parts by mass of the composite resin particles) of isopentane as a foaming agent was supplied, then the temperature was raised to 70°C, and stirring was continued for 4 hours, whereby expandable particles were obtained. Thereafter, the mixture was cooled to 30°C or lower, the autoclave was depressurized after completion of the cooling, and the surfactant was immediately washed with distilled water, dehydrated, and dried to obtain expandable particles.

Production of Foam Particles

The obtained expandable resin particles were put into a cylindrical pre-foaming machine equipped with a stirrer having an inner volume of 50 L, and heated with water vapor of 0.02 MPa while stirring to produce foam particles having a bulk density of 25 kg/m$^3$ (generally, sometimes also referred to as "pre-foam particles").

Production of Foam Molded Body

The obtained foam particles were left at 23°C for one day, and then placed in a mold for molding (length of 400 mm, width of 300 mm, thickness of 30 mm) of an automatic foamed bead molding machine (DPM-7454, produced by DABO Japan Ltd.), and the minimum vapor pressure value was evaluated according to the method described above in the "Moldability of Foam Molded Body; Water Vapor Pressure" section. As a result, the minimum vapor pressure value was 0.09 MPa.

Next, a foam molded body for various evaluations was obtained in the same manner using the same foam particles and water vapor of 0.15 MPa. Specifically, water vapor of 0.15 MPa was introduced into the mold for 50 seconds to heat and foam the foam particles, followed by cooling until the maximum surface pressure of the resulting foam molded body decreased to 0.01 MPa, thereby obtaining a foam molded body having a density of 25 kg/m$^3$.

The obtained foam molded body was subjected to various tests. The results are shown in Table 3.

Example 2

Production of Seed Particles

Seed particles were produced in the same manner as in Example 1, except that the amounts of the polypropylene-based resin (A), ethylene-based copolymer (B1), and carbon MB (C) used were changed to 55.3:35.5:11.2 (mass ratio).

Production of Composite Resin Particles

First Step

40 g of magnesium pyrophosphate (dispersant), 0.6 g of sodium dodecylbenzenesulfonate (surfactant), 0.15 g of sodium nitrite, and 2 kg of pure water were placed in an autoclave equipped with a stirrer having an inner volume of 5 liters to obtain a dispersing medium. 800 g of the seed particles were dispersed in the dispersing medium at 30°C and maintained for 10 minutes, and then heated to 70°C to obtain a suspension. Further, while maintaining this suspension at 70°C, a solution obtained by dissolving 0.8 g of dicumyl peroxide (polymerization initiator) in 400 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Second Step

Next, a dispersion prepared by dispersing 3 g of sodium dodecylbenzenesulfonate in 20 g of pure water was added dropwise over 10 minutes to the reaction liquid cooled to 122°C. Then, a solution obtained by dissolving 5 g of dicumyl peroxide (polymerization initiator) in 800 g of a styrene monomer was added dropwise at a rate corresponding to 0.01 parts by mass/sec with respect to 100 parts by mass of the seed particles. After dropping, the resultant was maintained at 122°C for 1 hour, thereby impregnating the modified polypropylene-based resin particles with the styrene monomer. After impregnation, the resultant was heated to 140°C and maintained at this temperature for 3 hours for polymerization (second polymerization).

60 g of TAIC-6B as a flame retardant and 15 g of biscumyl as a flame retardant aid were put into the reaction liquid. After putting them in, the temperature of the reaction system was raised to 140°C, and stirring was continued for 3 hours, thereby producing flame retardant-containing composite resin particles (ratio of the mass of seed particles to the mass of polystyrene = 40:60). Then, the composite resin particles were cooled to 30°C or lower and taken out from the autoclave. The obtained composite resin particles were subjected to various tests. The results are shown in Table 3.

Production of Expandable Particles, Foam Particles, and Foam Molded Body

Expandable particles, foam particles, and a foam molded body were obtained in the same manner as in Example 1, except that the obtained composite resin particles were used. The minimum vapor pressure value was 0.11 MPa.
The foam molded body for various evaluations was subjected to various tests. The results are shown in Table 3.

Examples 3, 4, and 6, and Comparative Examples 1, 3, and 4

Expandable particles, foam particles, and foam molded bodies were obtained in the same manner as in Example 1 when the mass ratio of the seed particles to PS was 30:70, and in the same manner as in Example 2 when the same mass ratio was 40:60, except that the resin type, the resin amount, the carbon MB type, the carbon MB amount, the feed rate and temperature of the styrene monomer in the second step, the presence or absence of sodium nitrite, the gas species, and the amount of flame retardant aid added were as shown in Tables 3 to 5.
The minimum vapor pressure values during the production of each foam molded body are shown in Tables 3 to 5.
The foam molded bodies for various evaluations were subjected to various tests. The test results are shown in Tables 3 to 5.

Example 5

Production of Seed Particles

Seed particles were produced in the same manner as in Example 1, except that the polypropylene-based resin shown in Table 4 was used, and the amounts of the polypropylene-based resin (A), ethylene-based copolymer (B1), and carbon MB (C) used were changed to 62.2:26.6:11.2 (mass ratio).

Production of Composite Resin Particles

First Step

40 g of magnesium pyrophosphate (dispersant), 0.6 g of sodium dodecylbenzenesulfonate (surfactant), 0.15 g of sodium nitrite, and 2 kg of pure water were placed in an autoclave equipped with a stirrer having an inner volume of 5 liters to obtain a dispersing medium. 200 g of the seed particles were dispersed in the dispersing medium at 30°C and maintained for 10 minutes, and then heated to 70°C to obtain a suspension. Further, while maintaining this suspension at 70°C, a solution obtained by dissolving 0.2 g of dicumyl peroxide (polymerization initiator) in 100 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Second Step

Next, a dispersion prepared by dispersing 3 g of sodium dodecylbenzenesulfonate and 0.15 g of sodium nitrite in 20 g of pure water was added dropwise over 10 minutes to the reaction liquid cooled to 122°C. Then, a solution obtained by dissolving 11 g of dicumyl peroxide (polymerization initiator) in 1700 g of a styrene monomer was added dropwise at a rate corresponding to 0.01 parts by mass/sec with respect to 100 parts by mass of the seed particles. After dropping, the resultant was maintained at 122°C for 1 hour, thereby impregnating the modified polypropylene-based resin particles with the styrene monomer. After impregnation, the resultant was heated to 140°C and maintained at this temperature for 3 hours for polymerization (second polymerization).
60 g of TAIC-6B as a flame retardant and 15 g of biscumyl as a flame retardant aid were put into the reaction liquid. After putting them in, the temperature of the reaction system was raised to 140°C, and stirring was continued for 3 hours, thereby producing flame retardant-containing composite resin particles (ratio of the mass of seed particles to the mass of polystyrene = 10:90). Then, the composite resin particles were cooled to 30°C or lower and taken out from the autoclave. The obtained composite resin particles were subjected to various tests. The results are shown in Table 4.

Production of Expandable Particles, Foam Particles, and Foam Molded Body

Expandable particles, foam particles, and a foam molded body were obtained in the same manner as in Example 1, except that the obtained composite resin particles were used. The minimum vapor pressure value was 0.08 MPa.

The foam molded body for various evaluations was subjected to various tests. The results are shown in Table 4.

Comparative Example 2

Production of Seed Particles

Seed particles were produced in the same manner as in Example 1.

Production of Composite Resin Particles

First Step

40 g of magnesium pyrophosphate (dispersant), 0.6 g of sodium dodecylbenzenesulfonate (surfactant), 0.15 g of sodium nitrite, and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 70°C to obtain a suspension. Further, while maintaining this suspension at 70°C, a solution obtained by dissolving 0.6 g of dicumyl peroxide (polymerization initiator) in 300 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Second Step

Next, a dispersion prepared by dispersing 3 g of sodium dodecylbenzenesulfonate in 20 g of pure water was added dropwise over 10 minutes to the reaction liquid cooled to 125°C. Then, a solution obtained by dissolving 20 g of butyl acrylate and 5 g of dicumyl peroxide (polymerization initiator) in 1080 g of a styrene monomer was added dropwise at a rate corresponding to 0.05 parts by mass/sec with respect to 100 parts by mass of the seed particles. After dropping, the resultant was maintained at 125°C for 1 hour, thereby impregnating the modified polypropylene-based resin particles with the styrene monomer. After impregnation, the resultant was heated to 140°C and maintained at this temperature for 3 hours for polymerization (second polymerization).

60 g of TAIC-6B as a flame retardant and 20 g of biscumyl as a flame retardant aid were put into the reaction liquid. After putting them in, the temperature of the reaction system was raised to 140°C, and stirring was continued for 3 hours, thereby producing flame retardant-containing composite resin particles (ratio of the mass of seed particles to the mass of polystyrene = 30:70). Then, the composite resin particles were cooled to 30°C or lower and taken out from the autoclave. The obtained composite resin particles were subjected to various tests. The results are shown in Table 3.

Production of Expandable Particles, Foam Particles, and Foam Molded Body

Expandable particles, foam particles, and a foam molded body were obtained in the same manner as in Example 1, except that the obtained composite resin particles were used. The minimum vapor pressure value was 0.09 MPa.

The foam molded body for various evaluations was subjected to various tests. The results are shown in Table 5.

Table 3

| | | Example 1 | Example 2 | Example 3 |
|---|---|---|---|---|
| Seed particles | (A) Polypropylene-based resin | F744NP | F744NP | F744NP |
| | (B1) Ethylene-based copolymer | EF0505 | EF0505 | EF0505 |
| | (C) Carbon MB | 10H381 | 10H381 | 10H381 |
| | A:B1 mass ratio | 80:20 | 60:40 | 80:20 |
| | A:B1:C mass ratio | 71:17.8:11.2 | 53.3:35.5:11.2 | 72.8:18.2:9.0 |
| | (B2) Amount of PE-based resin in C (mass%) | 55 | 55 | 55 |
| | (C1)Amount of carbon component in C (mass%) | 45 | 45 | 45 |
| | A:B1+B2:C1 mass ratio | 71.0:24.0:5.0 | 53.3:41.7:5.0 | 72.8:23.2:4.0 |
| Polymerization conditions | Styrene monomer feed rate in the second step (parts by mass/second) | 0.02 | 0.01 | 0.02 |
| | Styrene monomer feed temperature in the second step | 122°C | 122°C | 125°C |
| | Sodium nitrite | Yes | None | Yes |
| Composite resin particles | A+B1+B2+C1:PS | 30:70 | 40:60 | 30:70 |
| | (Meth)acrylic acid ester | - | - | - |
| | Amount of (methacrylic acid ester added (%), relative to PS | | | |
| | Type of flame retardant | TAIC-6B | TAIC-6B | TAIC-6B |
| | Amount of flame retardant added (mass%) | 3 | 3 | 3 |
| | Flame retardant aid | Biscumyl | Biscumyl | Biscumyl |
| | Amount of flame retardant aid added (mass%) | 0.75 | 0.75 | 0.75 |
| | Gas species | B | B | A |
| | Surface absorbance ratio | 2.26 | 2.55 | 1.89 |
| | Central area absorbance ratio | 7.17 | 6.89 | 7.09 |
| | Surface absorbance ratio/central area absorbance ratio | 0.32 | 0.37 | 0.27 |
| | L/D | 0.95 | 0.82 | 0.96 |
| Productivity evaluation | Minimum vapor pressure value (MPa) | 0.09 | 0.11 | 0.10 |
| Physical property evaluation | Foam molded body density (kg/m$^3$) | 25 | 25 | 25 |
| | L-value (blackness) of molded body | 33.2 | 31.1 | 34.2 |
| | Heating dimensional change rate (%) | 0.8 | 0.7 | 0.8 |
| | Burning rate (mm/min) | Self-extinguishing | Self-extinguishing | Self-extinguishing |

Table 4

| | | Example 4 | Example 5 | Example 6 |
|---|---|---|---|---|
| Seed particles | (A) Polypropylene-based resin | F744NP | PL500A | F744NP |
| | (B1) Ethylene-based copolymer | A1100 | EF0505 | EF0505 |
| | (C) Carbon MB | 10H381 | 10H381 | MHRB013 |
| | A:B1 mass ratio | 80:20 | 70:30 | 80:20 |
| | A:B1:C mass ratio | 71:17.8:11.2 | 62.2:26.6:11.2 | 66.6:16.7:16.7 |
| | (B2) Amount of PE-based resin in C (mass%) | 55 | 55 | 70 |
| | (C1) Amount of carbon component in C (mass%) | 45 | 45 | 30 |
| | A:B1+B2:C1 mass ratio | 71.0:24.0:5.0 | 62.2:32.8:5.0 | 66.6:28.4:5.0 |
| Polymerization conditions | Styrene monomer feed rate in the second step (parts by mass/second) | 0.02 | 0.01 | 0.02 |
| | Styrene monomer feed temperature in the second step | 122°C | 122°C | 122°C |
| | Sodium nitrite | Yes | Yes | Yes |
| Composite resin particles | A+B1+B2+C1:PS | 30:70 | 10:90 | 30:70 |
| | (Meth)acrylic acid ester | - | - | - |
| | Amount of (meth)acrylic acid ester added (%), relative to PS | - | - | - |
| | Type of flame retardant | TAIC-6B | TAIC-6B | TAIC-6B |
| | Amount of flame retardant added (mass%) | 3 | 3 | 3 |
| | Flame retardant aid | Biscumyl | Biscumyl | Biscumyl |
| | Amount of flame retardant aid added (mass%) | 0.75 | 0.75 | 0.75 |
| | Gas species | B | B | B |
| | Surface absorbance ratio | 2.66 | 4.81 | 2.84 |
| | Central area absorbance ratio | 7.08 | 7.55 | 7.19 |
| | Surface absorbance ratio/central area absorbance ratio | 0.38 | 0.64 | 0.39 |
| | L/D | 0.95 | 0.75 | 0.91 |
| Productivity evaluation | Minimum vapor pressure value (MPa) | 0.09 | 0.08 | 0.08 |
| Physical property evaluation | Foam molded body density (kg/m$^3$) | 25 | 25 | 25 |
| | L-value (blackness) of molded body | 34.8 | 38.9 | 36.1 |
| | Heating dimensional change rate (%) | 0.9 | 1.1 | 1.1 |
| | Burning rate (mm/min) | 112 | 102 | Self-extinguishing |

Table 5

| | | Comparative Example 1 | Comparative Example 2 | Comparative Example 3 | Comparative Example 4 |
|---|---|---|---|---|---|
| Seed particles | (A) Polypropylene-based resin | F744NP | F744NP | F744NP | F744NP |
| | (B1) Ethylene-based copolymer | EF0505 | EF0505 | EF0505 | - |
| | (C) Carbon MB | 10H381 | 10H381 | 10H381 | 10H381 |
| | A:B1 mass ratio | 80:20 | 80:20 | 70:30 | 100:00 |
| | A:B1:C mass ratio | 71:17.8:11.2 | 71:17.8:11.2 | 62.2:26.6:11.2 | 88.8:0:11.2 |
| | (B2) Amount of PE-based resin in C (mass%) | 55 | 55 | 55 | 55 |
| | (C1) Amount of carbon component in C (mass%) | 45 | 45 | 45 | 45 |
| | A:B1+B2:C1 mass ratio | 71.0:24.0:5.0 | 71.0:24.0:5.0 | 62.2:32.8:5.0 | 88.8:6.2:5.0 |
| Polymerization conditions | Styrene monomer feed rate in the second step (parts by mass/second) | 0.05 | 0.05 | 0.05 | 0.02 |
| | Styrene monomer feed temperature in the second step | 125°C | 125°C | 125°C | 125°C |
| | Sodium nitrite | None | None | None | Yes |
| | A+B1+B2+C1:PS | 30:70 | 30:70 | 40:60 | 40:60 |
| | (Meth)acrylic acid ester | - | Butyl acrylate | - | - |
| | Amount of (meth)acrylic acid ester added (%), relative to PS | - | 1.45 | - | - |
| | Type of flame retardant | TAIC-6B | TAIC-6B | TAIC-6B | TAIC-6B |
| Composite resin particles | Amount of flame retardant added (mass%) | 3 | 3 | 3 | 3 |
| | Flame retardant aid | Biscumyl | Biscumyl | Biscumyl | Biscumyl |
| | Amount of flame retardant aid added (mass%) | 1.0 | 1.0 | 1.0 | 0.5 |
| | Gas species | A | A | B | B |
| | Surface absorbance ratio | 6.41 | 6.62 | 5.58 | 2.24 |
| | Central area absorbance ratio | 6.33 | 6.31 | 6.31 | 6.71 |
| | Surface absorbance ratio/central area absorbance ratio | 1.01 | 1.05 | 0.88 | 0.33 |
| | UD | 0.95 | 0.95 | 0.91 | 0.95 |

(continued)

| | | Comparative Example 1 | Comparative Example 2 | Comparative Example 3 | Comparative Example 4 |
|---|---|---|---|---|---|
| Productivity evaluation | Minimum vapor pressure value (MPa) | 0.15 | 0.09 | 0.13 | 0.22 |
| Physical property evaluation | Foam molded body density (kg/m$^3$) | 25 | 25 | 25 | 25 |
| | L-value (blackness) of molded body | 35.0 | 33.2 | 34.2 | 29.8 |
| | Heating dimensional change rate (%) | 0.9 | 1.3 | 0.5 | 0.4 |
| | Burning rate (mm/min) | Self-extinguishing | Self-extinguishing | Self-extinguishing | Self-extinguishing |

The meaning of each term in Tables 3 to 5 is as follows:

A:B1 mass ratio: the mass ratio of the polypropylene-based resin (A) to the ethylene-based copolymer (B1)
A:B1:C mass ratio: the mass ratio of the polypropylene-based resin (A) to the ethylene-based copolymer (B1) to the carbon MB (C)
A:B1+B2:C1 mass ratio: the mass ratio of the polypropylene-based resin (A) to the ethylene-based copolymer (B1) to the polyethylene-based resin (B2) in the carbon MB to the carbon component (C1) in carbon MB
A+B1+B2+C1:PS mass ratio: the ratio of the total of the polypropylene-based resin (A), ethylene-based copolymer (B1), polyethylene-based resin (B2) in the carbon MB, and carbon component (C1) in the carbon MB to the mass of polystyrene (including (meth)acrylic acid ester component, if applicable)
Amount of flame retardant added: the ratio of the amount of the flame retardant added (mass%) relative to the total mass of the polypropylene-based resin (A), ethylene-based copolymer (B1), carbon MB (C), other resins (D), and polystyrene (including (meth)acrylic acid ester component, if applicable)
Amount of flame retardant aid added: the ratio of the flame retardant aid added (mass%) relative to the total mass of the polypropylene-based resin (A), ethylene-based copolymer (B1), carbon MB (C), other resins (D), and polystyrene (including (meth)acrylic acid ester component, if applicable)
Gas species A: butane (volume ratio of normal butane to isobutane = 7:3) as a foaming agent
Gas species B: isopentane as a foaming agent

**Claims**

1. Carbon-component-containing composite resin particles comprising a polypropylene-based resin, a polyethylene-based resin, a carbon component, and a polystyrene-based resin,

   wherein the ratio of the total mass content of the polypropylene-based resin, the polyethylene-based resin, and the carbon component to the mass content of the polystyrene-based resin ranges from 5:95 to 50:50, and
   the composite resin particles have a surface absorbance ratio that is determined by the following method and that falls within a range of 1.0 to 5.0:
   Surface absorbance ratio ($R_S$): absorbance values at 1380 cm$^{-1}$ (D1380) and 698 cm$^{-1}$ (D698) are calculated from an infrared absorption spectrum obtained by analyzing a surface of the composite resin particles by ATR infrared spectroscopy and used in the formula D698/D1380 to obtain a value as the surface absorbance ratio.

2. The carbon-component-containing composite resin particles according to claim 1, wherein the content of the polypropylene-based resin is 2 to 50 mass%, the content of the polyethylene-based resin is 2 to 50 mass%, the content of the carbon component is 0.5 to 5 mass%, and the content of the polystyrene-based resin is 40 to 95 mass%, based on the total mass of the composite resin particles.

3. The carbon-component-containing composite resin particles according to claim 1 or 2, wherein the ratio of the mass content of the polypropylene-based resin to the mass content of the polyethylene-based resin ranges from 50:50 to 90:10.

4. The carbon-component-containing composite resin particles according to any one of claims 1 to 3, which have a central area absorbance ratio that is determined by the following method and that falls within a range of 2.0 to 30.0:
   Central area absorbance ratio ($R_C$): absorbance values at 1380 cm$^{-1}$ (D1380) and 698 cm$^{-1}$ (D698) are calculated from an infrared absorption spectrum obtained by analyzing a central area of the composite resin particles by ATR infrared spectroscopy and used in the formula D698/D1380 to obtain a value as the central area absorbance ratio.

5. The carbon-component-containing composite resin particles according to claim 4, wherein the ratio of the surface absorbance ratio ($R_S$) to the central area absorbance ratio ($R_C$) ($R_S/R_C$) is 0.10 to 0.90.

6. The carbon-component-containing composite resin particles according to any one of claims 1 to 5, wherein the polyethylene-based resin comprises at least one member selected from the group consisting of an ethylene-based copolymer and polyethylene.

7. The carbon-component-containing composite resin particles according to claim 6, wherein the ethylene-based copolymer comprises an ethylene-vinyl acetate copolymer.

8. The carbon-component-containing composite resin particles according to claim 7, wherein the ethylene-vinyl acetate copolymer has a melting point of 100 to 120°C and has a ratio of mass average molecular weight (Mw) to number average molecular weight (Mn) (Mw/Mn) of 1.0 to 7.0.

9. The carbon-component-containing composite resin particles according to any one of claims 1 to 8, wherein the polypropylene-based resin is random polypropylene.

10. The carbon-component-containing composite resin particles according to any one of claims 1 to 9, wherein the carbon component is contained as a carbon masterbatch containing the carbon component and a polyethylene-based resin.

11. The carbon-component-containing composite resin particles according to claim 10, wherein the polyethylene-based resin contained in the carbon masterbatch is at least one member selected from the group consisting of high-density polyethylene and linear low-density polyethylene.

12. Foam particles comprising the carbon-component-containing composite resin particles according to any one of claims 1 to 11.

13. The foam particles according to claim 12, which have a bulk density of 10 kg/m$^3$ to 200 kg/m$^3$.

14. A foam molded body comprising the foam particles according to claim 12 or 13.

15. The foam molded body according to claim 14, which has a density of 20 kg/m$^3$ to 50 kg/m$^3$.

16. An automobile component comprising the foam molded body according to claim 14 or 15.

17. A method for producing carbon-component-containing composite resin particles for producing an in-mold foam molded body, the composite resin particles comprising a polypropylene-based resin, a polyethylene-based resin, a carbon component, and a polystyrene-based resin, the method comprising:
step (A) of impregnating seed particles containing a polypropylene-based resin, a polyethylene-based resin, and a carbon component with a styrene-based monomer and polymerizing the styrene-based monomer to obtain carbon-component-containing composite resin particles,
wherein in step (A), the styrene-based monomer is added at a rate of 0.03 parts by weight/second or less per 100 parts by weight of the seed particles in the presence of a water-soluble polymerization inhibitor.

18. The method for producing carbon-component-containing composite resin particles according to claim 17, wherein the carbon component is contained in the seed particles as a carbon masterbatch containing the carbon component.

19. The method for producing carbon-component-containing composite resin particles according to claim 17 or 18, wherein the amount of the water-soluble polymerization inhibitor used is 10 ppm to 2000 ppm based on the mass of the seed particles.

20. The method for producing carbon-component-containing composite resin particles according to any one of claims 17 to 19, wherein the water-soluble polymerization inhibitor is at least one member selected from the group consisting of sodium nitrite, potassium nitrite, ammonium nitrite, calcium nitrite, silver nitrite, strontium nitrite, cesium nitrite, barium nitrite, magnesium nitrite, lithium nitrite, and dicyclohexylammonium nitrite.

Fig. 1

## INTERNATIONAL SEARCH REPORT

| International application No. |
| --- |
| **PCT/JP2024/006764** |

| A. | CLASSIFICATION OF SUBJECT MATTER |
| --- | --- |

*C08J 9/16*(2006.01)i; *C08K 3/04*(2006.01)i
FI:   C08J9/16 CES; C08J9/16 CET; C08K3/04

According to International Patent Classification (IPC) or to both national classification and IPC

| B. | FIELDS SEARCHED |
| --- | --- |

Minimum documentation searched (classification system followed by classification symbols)

C08J9/00-9/42; C08K3/00-13/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/202680 A1 (SEKISUI PLASTICS CO., LTD.) 29 September 2022 (2022-09-29) claims, table 4, examples 10-12 | 1-20 |
| A | WO 2008/117504 A1 (SEKISUI PLASTICS CO., LTD.) 02 October 2008 (2008-10-02) entire text | 1-20 |
| A | JP 2010-83971 A (SEKISUI PLASTICS CO., LTD.) 15 April 2010 (2010-04-15) entire text | 1-20 |
| A | JP 2010-222546 A (SEKISUI PLASTICS CO., LTD.) 07 October 2010 (2010-10-07) entire text | 1-20 |
| A | JP 2017-179243 A (SEKISUI PLASTICS CO., LTD.) 05 October 2017 (2017-10-05) entire text | 1-20 |
| A | JP 2020-50784 A (SEKISUI PLASTICS CO., LTD.) 02 April 2020 (2020-04-02) entire text | 1-20 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 April 2024** | **14 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/006764**

### C. DOCUMENTS CONSIDERED TO BE RELEVANT

| Category* | Citation of document, with indication, where appropriate, of the relevant passages | Relevant to claim No. |
|---|---|---|
| A | JP 2018-53029 A (SEKISUI PLASTICS CO., LTD.) 05 April 2018 (2018-04-05) entire text | 1-20 |
| A | JP 2013-121998 A (SEKISUI PLASTICS CO., LTD.) 20 June 2013 (2013-06-20) entire text | 1-20 |
| A | JP 8-208916 A (SUMITOMO CHEMICAL CO., LTD.) 13 August 1996 (1996-08-13) entire text | 1-20 |

Form PCT/ISA/210 (second sheet) (July 2022)

**INTERNATIONAL SEARCH REPORT**
Information on patent family members

International application No.

**PCT/JP2024/006764**

| Patent document cited in search report | | | Publication date (day/month/year) | Patent family member(s) | | | Publication date (day/month/year) |
|---|---|---|---|---|---|---|---|
| WO | 2022/202680 | A1 | 29 September 2022 | EP | 4317227 | A1 | |
| | | | | claims, table 4, examples 10-12 | | | |
| | | | | CN | 117043257 | A | |
| | | | | TW | 202248304 | A | |
| WO | 2008/117504 | A1 | 02 October 2008 | US | 2010/0063170 | A1 | |
| | | | | claims, examples | | | |
| | | | | EP | 2133372 | A1 | |
| | | | | CN | 101636423 | A | |
| | | | | TW | 200838916 | A | |
| JP | 2010-83971 | A | 15 April 2010 | (Family: none) | | | |
| JP | 2010-222546 | A | 07 October 2010 | (Family: none) | | | |
| JP | 2017-179243 | A | 05 October 2017 | (Family: none) | | | |
| JP | 2020-50784 | A | 02 April 2020 | (Family: none) | | | |
| JP | 2018-53029 | A | 05 April 2018 | (Family: none) | | | |
| JP | 2013-121998 | A | 20 June 2013 | (Family: none) | | | |
| JP | 8-208916 | A | 13 August 1996 | US | 5726215 | A | |
| | | | | claims, examples | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4718645 B

- WO 2022202680 A